# EUROPEAN PATENT APPLICATION

(11) **EP 2 942 743 A1**
(43) Date of publication of application: **11.11.2015**
(21) Application number: 13870326.9
(22) Date of filing: 18.12.2013
(51) Int. Cl.: G06Q 10/06, G06Q 10/10

(54) **METHOD, DEVICE AND SYSTEM FOR SCHEDULING MEETINGS**

(30) Priority: 06.01.2013 CN 201310003548
(71) Applicant: Huawei Technologies Co., Ltd., Longgang District Shenzhen, Guangdong 518129 (CN)
(72) Inventor: WANG, Pulin, Shenzhen Guangdong 518129 (CN); CHEN, Xianyi, Shenzhen Guangdong 518129 (CN); LI, Junhua, Shenzhen Guangdong 518129 (CN)
(74) Representative: Goddar, Heinz J.
(86) International application number: PCT/CN2013/089802
(87) International publication number: WO 2014/106430

(57) **Abstract**

Embodiments of the present invention disclose a meeting scheduling method, device, and system, which are related to the field of communications and are used to save waiting time of a participant of a next meeting and increase working efficiency. The method according to an embodiment of the present invention includes: acquiring phase information of a current meeting according to a preset database; performing data mining on the phase information of the current meeting according to a preset policy to acquire a phase conclusion of the current meeting; and sending a meeting notification to a meeting participant of a next meeting according to the phase conclusion of the current meeting.

## Description

This application claims priority to Chinese Patent Application No. 201310003548.7, filed with the Chinese Patent Office on January 6, 2013 and entitled "MEETING SCHEDULING METHOD, DEVICE, AND SYSTEM", which is incorporated herein by reference in its entirety.

### TECHNICAL FIELD

The present invention relates to the field of communications, and in particular, to a meeting scheduling method, device, and system.

### BACKGROUND

With an increasingly rapid working pace in modern times, people need to participate in more meetings, and a same meeting room may be often consecutively reserved to hold meetings, which causes uncertain waiting time between a current meeting and a next meeting; therefore, to reduce the waiting time of a meeting participant of the next meeting and increase working efficiency, proper scheduling needs to be performed on the next meeting.

In the prior art, short message and/or email notifications are sent to participants of a next meeting in advance generally according to reserved start time of the next meeting, or short message and/or email notifications are separately sent to participants of a next meeting according to a difference in time consumed on journey.

The inventor finds that at least the following problems exist in the prior.

In an existing meeting scheduling method, notification and scheduling are performed only according to reserved meeting start time of a next meeting, which is inadequate to cope with a current complex working environment. For example, when a current meeting is delayed, a participant of a later meeting is still confronted with uncertain waiting time, which reduces working efficiency.

### SUMMARY

In a meeting scheduling method, device, and system provided by embodiments of the present invention, phase information of a current meeting is acquired, proper data mining analysis is performed on the information to obtain a phase conclusion of the current meeting, and a meeting notification is sent to a meeting participant of a next meeting according to the phase conclusion of the current meeting, thereby saving waiting time of the participant of the next meeting, and increasing working efficiency.

To achieve the foregoing objective, the embodiments of the present invention use the following technical solutions.

According to a first aspect, an embodiment of the present invention provides a meeting scheduling method, including:
acquiring phase information of a current meeting according to a preset database;
performing data mining on the phase information of the current meeting according to a preset policy to acquire a phase conclusion of the current meeting; and
sending a meeting notification to a meeting participant of a next meeting according to the phase conclusion of the current meeting.

In a first possible implementation manner, according to the first aspect, the acquiring phase information of a current meeting according to a preset database is specifically implemented as:
acquiring initial information of the current meeting, where the initial information of the current meeting includes one or several types of the following information: document information, audio information, video information, and meeting room environment change information; and
extracting information, which is in the initial information of the current meeting and matches information in the preset database, as the phase information of the current meeting.

In a second possible implementation manner, with reference to the first aspect or the first possible implementation manner, the performing data mining on the phase information of the current meeting according to a preset policy to acquire a phase conclusion of the current meeting is specifically implemented as:
preprocessing the phase information of the current meeting, and converting the phase information of the current meeting into a digital stream; and
performing data mining, according to a preset data mining algorithm, on the digital stream converted from the phase information of the current meeting, so as to acquire the phase conclusion of the current meeting.

In a third possible implementation manner, with reference to the first aspect or the first possible implementation manner or the second possible implementation manner, the preprocessing the phase information of the current meeting is specifically implemented as:
performing data cleaning on the phase information of the current meeting, so as to delete repetitive information from the phase information of the current meeting;
performing data integration on phase information that is of the current meeting and that is after the data cleaning, and establishing a data warehouse; and
assigning, to phase information in the data warehouse, a weight value corresponding to matched preset phase information in the preset logical database, and mapping the acquired weight value into an initial digital stream to obtain a digital stream, where the logical database includes preset phase information that is arranged in a preset sequence and that has different weight values, and a sequence of the initial digital stream is the same as the sequence of the preset phase information in the logical database.

In a fourth possible implementation manner, with reference to the first aspect or any one of the first possible implementation manner to the third possible implementation manner, the phase conclusion of the current meeting may include: the meeting ends, the meeting is terminated, and the meeting is delayed.

In a fifth possible implementation manner, with reference to the first aspect or any one of the first possible implementation manner to the fourth possible implementation manner,
when the acquired phase conclusion of the current meeting is that the meeting ends, the sending a meeting notification to a meeting participant of a next meeting according to the phase conclusion of the current meeting is specifically implemented as: sending, to the meeting participant of the next meeting, a notification of participating in the meeting according to start time of the next meeting;
when the acquired phase conclusion of the current meeting is that the meeting is terminated, the sending a meeting notifcation to a meeting participant of a next meeting according to the phase conclusion of the current meeting is specifically implemented as: sending, to the meeting participant of the next meeting, the notification of participating in the meeting according to start time of the next meeting; and
when the acquired phase conclusion of the current meeting is that the meeting is delayed, the sending a meeting notification to a meeting participant of a next meeting according to the phase conclusion of the current meeting is specifically implemented as: sending, to the meeting participant of the next meeting, a notification that the current meeting is delayed or that a new meeting room is arranged for the next meeting.

In a sixth possible implementation manner, with reference to the first aspect or any one of the first possible implementation manner to the fifth possible implementation manner, the sending a meeting notification to a meeting participant of a next meeting according to the phase conclusion of the current meeting is specifically implemented as:
receiving feedback information that is sent by the meeting participant of the next meeting and about whether to participate in the meeting punctually;
acquiring a schedule of the meeting participant of the next meeting; and
sending the meeting notification to the meeting participant of the next meeting according to the phase conclusion of the current meeting, the feedback information of the meeting participant of the next meeting, and the schedule of the meeting participant of the next meeting.

According to a second aspect, an embodiment of the present invention provides a meeting scheduling device, including:
an acquiring unit, configured to acquire phase information of a current meeting according to a preset database, and transmit the phase information of the current meeting to a data mining unit;
the data mining unit, configured to receive the phase information of the current meeting from the acquiring unit, perform data mining on the phase information of the current meeting according to a preset policy to acquire a phase conclusion of the current meeting, and transmit the phase conclusion of the current meeting to a sending unit; and
the sending unit, configured to receive the phase conclusion of the current meeting from the data mining unit, and send a meeting notification to a meeting participant of a next meeting according to the phase conclusion of the current meeting.

In a first possible implementation manner, with reference to the second aspect, the acquiring unit is specifically implemented as:
an acquiring module, configured to acquire initial information of the current meeting, where the initial information of the current meeting includes one or several types of the following information: document information, audio information, video information, and meeting room environment change information; and
an extracting module, configured to extract information, which is in the initial information of the current meeting and matches information in the preset database, as the phase information of the current meeting; or
the data mining unit is specifically implemented as:
   a preprocessing module, configured to preprocess the phase information of the current meeting, and convert the phase information of the current meeting into a digital stream; and
   a data mining module, configured to perform data mining, according to a preset data mining algorithm, on the digital stream converted from the phase information of the current meeting, so as to acquire the phase conclusion of the current meeting.

In a second possible implementation manner, with reference to the second aspect or the first possible implementation manner, the preprocessing module is specifically implemented as:
a data cleaning submodule, configured to perform data cleaning on the phase information of the current meeting, so as to delete repetitive information from the phase information of the current meeting;
a data integration submodule, configured to perform data integration on phase information that is of the current meeting and that is after the data cleaning, and establish a data warehouse; and
a data conversion submodule, configured to assign, to phase information in the data warehouse, a weight value corresponding to matched preset phase information in the preset logical database, and map the acquired weight value into an initial digital stream to obtain a digital stream, where the logical database includes preset phase information that is arranged in a preset sequence and that has different weight values, and a sequence of the initial digital stream is the same as the sequence of the preset phase information in the logical database.

According to a third aspect, an embodiment of the present invention provides a meeting scheduling server, including:
a memory, configured to store a preset database, a preset policy, and a preset logical database, where the logical database includes preset phase information that is arranged in a preset sequence and that has different weight values;
a receiver, configured to acquire initial information of a current meeting, where the initial information of the current meeting includes one or several types of the following information: document information, audio information, video information, and meeting room environment change information;
a processor, configured to extract phase information of the current meeting according to the preset database and the initial information that is of the current meeting and that is acquired by the receiver, and perform data mining on the phase information of the current meeting according to the preset policy and the preset logical database to acquire a phase conclusion of the current meeting; and
a sender, configured to send a meeting notification to a meeting participant of a next meeting according to the phase conclusion of the current meeting.

In a first possible implementation manner, according to the third aspect, the receiver is further configured to receive feedback information that is sent by the meeting participant of the next meeting and about whether to participate in the meeting punctually;
the memory is further configured to store a schedule of the meeting participant of the next meeting; and
the sender is further configured to send the meeting notification to the meeting participant of the next meeting according to the phase conclusion of the current meeting, the feedback information of the meeting participant of the next meeting, and the schedule of the meeting participant of the next meeting.

According to a fourth aspect, an embodiment of the present invention provides a meeting scheduling system, including any meeting scheduling device provided by the foregoing second aspect, or any meeting scheduling server provided by the foregoing third aspect. According to the meeting scheduling method, device, and system provided by the embodiments of the present invention, phase information of a current meeting is acquired, proper data mining analysis is performed on the information to obtain a phase conclusion of the current meeting, and a meeting notification is sent to a meeting participant of a next meeting according to the phase conclusion of the current meeting, thereby saving waiting time of the participant of the next meeting, increasing working efficiency, and overcoming a disadvantage in the prior art that: notification and scheduling can be performed only according to reserved meeting start time of a next meeting, which is inadequate to cope with a current complex working environment, for example, when a current meeting is delayed, a participant of a later meeting is still confronted with uncertain waiting time, resulting in reduced working efficiency.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a meeting scheduling method according to an embodiment of the present invention;
FIG. 2 is a flowchart of another meeting scheduling method according to an embodiment of the present invention;
FIG. 3 is a flowchart of acquiring initial information of a meeting according to an embodiment of the present invention;
FIG. 4 is a structural diagram of a meeting scheduling device according to an embodiment of the present invention;
FIG. 5 is a structural diagram of another meeting scheduling device according to an embodiment of the present invention; and
FIG. 6 is a structural diagram of a meeting scheduling server according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

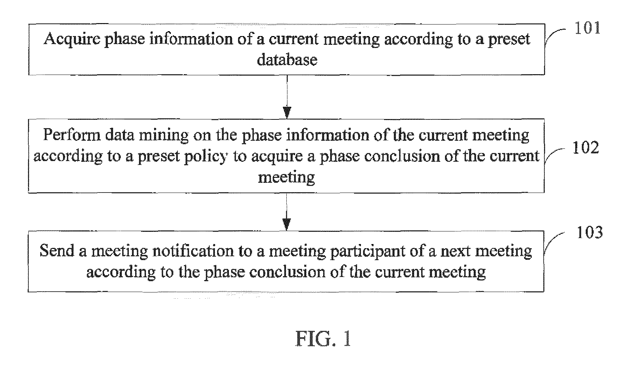

According to one aspect, an embodiment of the present invention provides a meeting scheduling method, and referring to FIG. 1, the method includes:
101: Acquire phase information of a current meeting according to a preset database.
102: Perform data mining on the phase information of the current meeting according to a preset policy to acquire a phase conclusion of the current meeting.
103: Send a meeting notification to a meeting participant of a next meeting according to the phase conclusion of the current meeting.

According to the meeting scheduling method provided by the embodiment of the present invention, phase information of a current meeting is acquired, proper data mining analysis is performed on the information to obtain a phase conclusion of the current meeting, and a meeting notification is sent to a meeting participant of a next meeting according to the phase conclusion of the current meeting, thereby saving waiting time of the participant of the next meeting, increasing working efficiency, and overcoming a disadvantage in the prior art that: notification and scheduling can be performed only according to reserved meeting start time of a next meeting, which is inadequate to cope with a current complex working environment, for example, when a current meeting is delayed, a participant of a later meeting is still confronted with uncertain waiting time, resulting in reduced working efficiency.

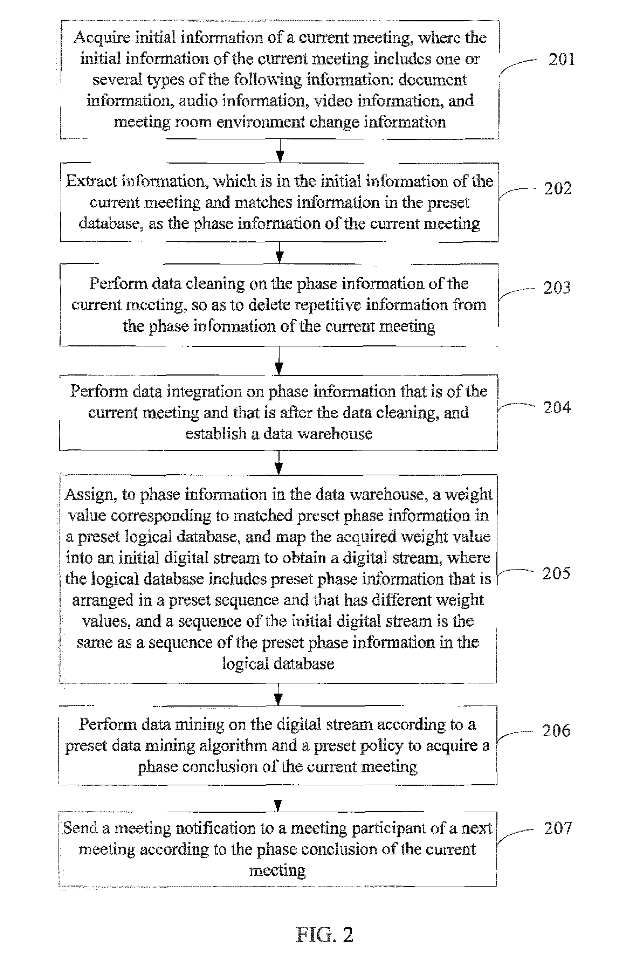

An embodiment of the present invention provides another meeting scheduling method, and referring to FIG. 2, the method includes:
201: Acquire initial information of a current meeting, where the initial information of the current meeting includes one or several types of the following information: document information, audio information, video information, and meeting room environment change information.

Exemplarily, the initial information of the current meeting may be one type or a combination of several types of the following: the document information, the audio information, the video information, and the meeting room environment change information.

The document information may include notepad information, presentation document information, and the like; the audio information may include information such as meeting speech information of a participant of a current meeting, and applause information of a participant of a current meeting, and the like; the video information may include expression information, action information, and the like that are of a participant of a current meeting; and the meeting room environment change information may include light on/off information, air conditioning on/off information, projector on/off information, and the like that are in a meeting room. The foregoing information is initial information without any processing.

Exemplarily, the document information may be acquired in the following manners.
A. Extract presentation document information by using a terminal device such as a computer desktop for presentation.
B. Acquire document information by taking a screenshot of a page presented by a terminal device such as a computer desktop.
C. Acquire, by using a camera, document information of a page presented by a terminal device such as a computer screen and a projector.

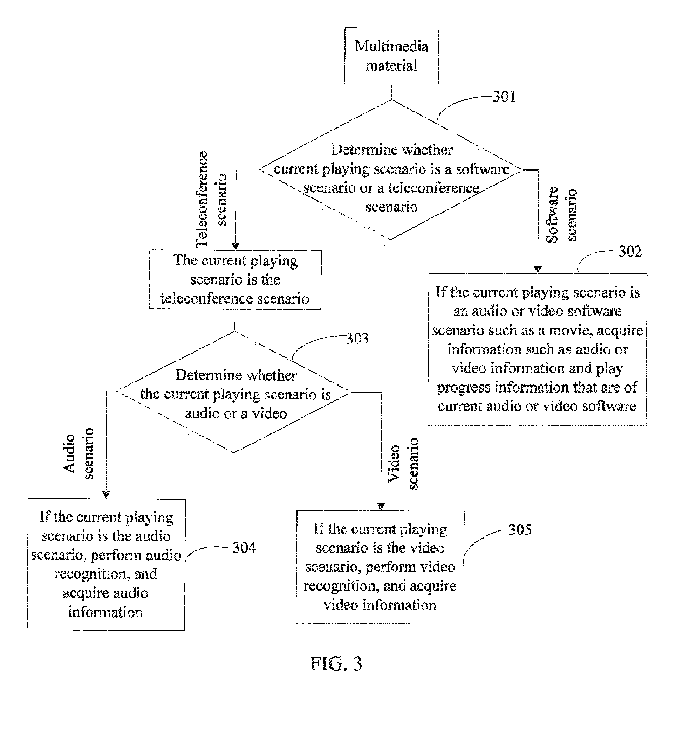

The audio and video information may be acquired in the following manners.
A. Extract audio or video information from a multimedia material by using a terminal device such as a computer desktop for presentation. Referring to FIG. 3, the manner may include:
   301: Determine whether current playing scenario is a software scenario or a teleconference scenario.
   302: If the current playing scenario is an audio or video software scenario such as a movie, acquire information such as audio or video information and play progress information that are of current audio or video software scenario.
   303. If the current playing scenario is an audio or video scenario of a teleconference, determine whether the current playing scenario is an audio scenario or a video scenario.
   304: If the current playing scenario is an audio scenario, perform audio recognition, and acquire audio information.
   305: If the current playing scenario is a video scenario, perform video recognition, and acquire video information.
B. Acquire the video information by taking a screenshot of a multimedia material presented by a terminal device such as a computer desktop.
C. Acquire, by using a camera, the video information of a multimedia material presented by a terminal device such as a computer screen and a projector.
D. Acquire audio information of a meeting by using a loudspeaker.

The meeting room environment change information may be acquired by using a camera. 202: Extract information, which is in the initial information of the current meeting and matches information in the preset database, as phase information of the current meeting. Exemplarily, the preset database includes preset information that is related to the phase information of the current meeting, where the preset information may include document information with a document attribute, audio information with an audio attribute, video information with a video property, and meeting room environment change information with an environment change attribute. The document information may include information such as information about a currently played page number, "Thank you", "The End", "Thanks", and "Finish" that are in the document information; the audio information may include information such as "Thanks", "Let's take a break for xx minutes", "The meeting is delayed for xx minutes", "The meeting is closed", and applause of a meeting participant; the video information may include information such as a meeting speaker bows, meeting participants collectively stand up, meeting participants collectively leave a meeting room; and the meeting room environment change information may include information such as a light is turned off, and a projector is turned off.

The phase information of the current meeting may be extracted by matching the initial information of the current meeting with the information in the preset database. For example, the initial information of the current meeting may be compared with the information in the preset database piece by piece, where meeting initial information that matches the information in the preset database is used as the phase information of the current meeting, and information that does not match the information in the preset database is discarded.

Exemplarily, a period may be preset, and initial information of the current meeting may be continuously acquired in each period; and in each period, phase information of the current meeting is extracted according to the initial information acquired in each period. Time duration of the period may be set according to an actual need. For example, the time duration of the period may be set to five minutes. Assuming that after initial information in a current period is matched with the preset database, extracted phase information of the current period includes document information: go to a last page, "Thank you", and "The End"; audio information: applause, "Thanks", and "The meeting is closed"; video information: meeting participants collectively stand up, and meeting participants collectively leave a meeting groom; and meeting room environment information: a light is turned off, and a projector is turned off. 203: Perform data cleaning on the phase information of the current meeting, so as to delete repetitive information from the phase information of the current meeting.

Exemplarily, repetitive information may exist in each type of information of the document information, the audio information, the video information, and the meeting room environment change information that are included in the phase information of the current meeting, and therefore, the repetitive redundant information needs to be deleted from each type of information. For example, if three "Thank you" are checked out in the document information, two "Thank you" need to be deleted, and only one "Thank you" is kept in the document information; in addition, if "Thanks" information is checked out both in the document information and the audio information, but one belongs to the document attribute, the other belongs to the audio attribute, which cannot be considered as repetitive information due to different attributes, and therefore, "Thanks" in both the document information and the audio information should be kept.

204: Perform data integration on phase information that is of the current meeting and that is after the data cleaning, and establish a data warehouse.

Exemplarily, data integration is performed by means of combination on data of multiple data sources such as document information, audio information, video information, and meeting room environment change information that are after the data cleaning, and the data is stored in a unified manner to build a data warehouse, where after the phase information that is of the current meeting and that is obtained in each period undergoes data cleaning and integration, a data warehouse of each period may be established separately. The data warehouse may be stored in a tabular form or another form, and referring to Table 1, Table 1 is a data warehouse of a current period.

**Table 1**

| **Information Type** | **Information** |
|---|---|
| Document information | Go to a last page |
| | Thank you |
| | The End |
| Audio information | Thanks |
| | Applause |
| | The meeting is closed |
| Video information | Meeting participants collectively stand up |
| | Meeting participants collectively leave a meeting room |
| Meeting room environment information | A light is turned off |
| | A projector is turned off |

205: Assign, to phase information in the data warehouse, a weight value corresponding to matched preset phase information in a preset logical database, and map the acquired weight value into an initial digital stream to obtain a digital stream, where the logical database includes preset phase information that is arranged in a preset sequence and that has different weight values, and a sequence of the initial digital stream is the same as a sequence of the weight values of the preset phase information in the logical database.

Exemplarily, multiple preset logical databases may be set according to different attributes of data included in the logical databases. For example, in the embodiment, five logical databases are set, which are separately a first logical database to a fifth logical database, where the first logical database includes only the document information, the second logical database includes only the audio information, the third logical database includes only the video information, the fourth logical database includes only the meeting room environment change information, and the fifth logical database includes the document information, the audio information, the video information, and the meeting room environment change information.

Each logical database includes preset phase information that is arranged in a preset sequence and that has different weight values. In different logical databases, sequences and weight values of same preset phase information may be different. For example, a sequence and a weight value of audio information "The meeting is closed" in the second logical database are different from those in the fifth logical database. In a same logical database, sequences and weight values of information with same content but different attributes may be different. For example, "Thanks" appears both in document information and audio information, but "Thanks" in the document information and "Thanks" in the audio information are different in attribute, and therefore may be different in sequential location and may also be different in weight value. A quantity of logical databases that are set, an information attribute included in each logical database, and a sequence and a weight value of preset phase information included in each logical database may be set according to a need, which are not limited by the embodiment of the present invention.

Preferably, the weight value of the preset phase information in the logical database may be a weight value that is after data normalization processing. For example, the weight value may be a weight value normalized into a range of 0 to 100, that is, a sum of weight values of the preset phase information in the logical database is 100. After the data normalization processing, not only integrity of data can be maintained, but also consistency between a result and the data that is before the normalization is maintained.

Exemplarily, audio attribute information in the preset logical database is obtained by means processing and filtering according to a word-formation rule, homophone determination, syntax and semantics, and background knowledge.

Exemplarily, the logical database may be stored in a tabular form, and certainly may also be stored in another form, and referring to Table 2, Table 2 shows the fifth logical database provided by the embodiment.

**Table 2**

| **Sequence Number** | **Information** | **Information Attribute** | **Weight value** |
|---|---|---|---|
| 1 | Meeting participants collectively leave a meeting room | Video information | 15 |
| 2 | Meeting participants collectively stand up | Video information | 08 |
| 3 | A light is turned off | Meeting room environment change information | 09 |
| 4 | A projector is turned off | Meeting room environment change information | 07 |
| 5 | The meeting is closed | Audio information | 20 |
| 6 | Thanks | Audio information | 03 |
| 7 | The meeting is delayed for xx minutes | Audio information | 07 |
| 8 | Applause | Audio information | 04 |
| 9 | Let's take a break for xx minutes | Audio information | 05 |
| 10 | Go to a last page | Document information | 09 |
| 11 | Thank you | Document information | 03 |
| 12 | The End | Document information | 10 |

Exemplarily, when acquired phase information in the data warehouse is converted into a digital stream, a proper logical database should be selected first according to the phase information included in the data warehouse. For example, if the data warehouse includes only document information, the first logical database that includes only document information should be selected; if the data warehouse includes only audio information, the second logical database that includes only audio information should be selected; and if the data warehouse includes document information, audio information, video information, and meeting room environment change information, the fifth logical database that includes document information, audio information, video information, and meeting room environment change information should be selected. The acquired data warehouse in the embodiment includes the document information, the audio information, the video information, and the meeting room environment change information, so that the fifth logical database corresponding to the data warehouse should be selected.

After a logical database is selected for the data warehouse, a weight value corresponding to the matched preset phase information in the preset logical database is assigned to the phase information in the data warehouse, and the acquired weight value is mapped into an initial digital stream to obtain a digital stream, where the logical database includes preset phase information that is arranged in a preset sequence and that has different weight values, and a sequence of the initial digital stream is the same as the sequence of the preset phase information in the logical database.

Exemplarily, the initial digital stream corresponding to the fifth logical database may be 00 00 00 00 00 00 00 00 00 00 00 00. To assign the weight value to the phase information in the data warehouse, the preset phase information that matches the phase information may be searched for in the logical database, and a weight value corresponding to the preset phase information is assigned. For example, preset phase information that matches the document information "Go to a last page" in the data warehouse and that is in a logical database is "Go to a last page", with a weight value being 09, and therefore, a weight value assigned to the document information "Go to a last page" in the data warehouse is 09, and then the weight value assigned to the phase information in the data warehouse is mapped into an initial digital stream, where a sequence of the initial digital stream is the same as a sequence of weight values of preset phase information in the logical database. An obtained digital stream is 15 08 09 00 20 03 07 04 00 09 00 10.

206: Perform data mining on the digital stream according to a preset data mining algorithm and a preset policy to acquire a phase conclusion of the current meeting.

Exemplarily, the data mining algorithm may use a method such as a Bayes algorithm, a decision tree classification C4.5 algorithm, and a support vector machine (Support Vector Machine, SVM for short) algorithm. The SVM algorithm is a trainable machine-learning method, where a model obtained after learning based on a small sample may implement data classification with relatively high accuracy, and the SVM algorithm is widely used in statistics analysis and regression analysis. Preferably, the SVM algorithm is selected in the embodiment to perform the data mining on the digital stream, so as to obtain the phase conclusion of the current meeting. However, the embodiment imposes no limitation on selecting a data mining algorithm.

A data mining process is introduced in detail in the following.

Exemplarily, different reference digital streams are prestored in an SVM, where the reference digital streams are set according to different preset logical databases. For example, the five logical databases are preset in the embodiment, so that five reference digital streams (a first reference digital stream to a fifth reference digital stream) are prestored in the SVM, and each reference digital stream includes weight values in sequence in a corresponding logical database. Assuming that the fifth reference digital stream is corresponding to the fifth logical database, the fifth reference digital stream may be 15 08 09 07 20 03 07 04 05 09 03 10, or a digital stream such as 30 16 18 14 40 06 14 08 10 18 06 20 arranged according to a mapping relationship.

An output result of matching a reference digital stream with a digital stream may be represented by a binary output value Y. According to the preset policy, different Y values may be corresponding to different phase conclusions of the current meeting, where the preset policy may be prestored in the SVM, and preset policies corresponding to the different reference digital streams may be different. If digits in a new digital stream obtained from digits in a digital stream according to a mapping relationship are the same as digits, at corresponding locations, of a reference digital stream, a matching result is represented by 1, and if digits in a new digital stream obtained from digits in a digital stream according to a mapping relationship are different from digits, at corresponding locations, of a reference digital stream, a matching result is represented by 0, where the mapping relationship may be prestored in the SVM.

Y may be obtained by matching a digit string that is obtained by matching and that includes only "1" and "0" with a digit string in a corresponding preset policy, so as to obtain the phase conclusion of the current meeting according to the preset policy. For example, for the fifth reference digital stream, the preset policy may be represented as: when the matching result is 111011010101, Y is output as 00, which indicates that the meeting ends; when the matching result is 000001011010, Y is output as 01, which indicates the meeting is at a halftime break; when the matching result is 110001010010, Y is output as 10, which indicates that the meeting is terminated; and when the matching result is 000001100010, Y is output as 11, which indicates that the meeting is delayed.

For a preset reference digital stream, the SVM needs to use an SVM active learning algorithm to train an SVM classifier, so that the SVM classifier may recognize that digital streams are corresponding to different reference digital streams. The SVM active learning algorithm may achieve a classification recognition effect with relatively high accuracy by training a small amount of data, and is a highly efficient SVM learning algorithm, and the SVM classifier is a tool for training and determining an input digital stream.

Exemplarily, if the fifth reference digital stream is 30 16 18 14 40 06 14 08 10 18 06 20, and the prestored mapping relationship is y=2x, the foregoing digital stream 15 08 09 00 20 03 07 04 00 09 00 10 acquired according to the fifth logical database is input in sequence into the SVM. After the digital stream is input into the SVM, the SVM classifier maps the digital stream 15 08 09 00 20 03 07 04 00 09 00 10 to 30 16 18 00 40 06 14 08 00 18 00 20 according to the mapping relationship y=2x, and matches the digital stream with the selected fifth reference digital stream 30 16 18 14 40 06 14 08 10 18 06 20, where an obtained matching result is 111011010101, and Y is output as 00, so as to obtain that the phase conclusion of the current meeting is that the meeting ends.

207: Send a meeting notification to a meeting participant of a next meeting according to the phase conclusion of the current meeting.

Exemplarily, the sending a meeting notification to a meeting participant of a next meeting according to the phase conclusion of the current meeting may include:
when the acquired phase conclusion of the current meeting is that the meeting ends, sending, to the meeting participant of the next meeting, a notification of participating in the meeting according to start time of the next meeting;
when the acquired phase conclusion of the current meeting is that the meeting is terminated, sending, to the meeting participant of the next meeting, the notification of participating in the meeting according to start time of the next meeting; and
when the acquired phase conclusion of the current meeting is that the meeting is delayed, notifying the meeting participant of the next meeting that the current meeting is delayed, or arranging a new meeting room for the next meeting and notifying the meeting participant of the next meeting.

Exemplarily, the meeting notification is sent to the participant of the next meeting a preset time in advance, where the meeting notification may include a meeting location and time, and a sending manner may include a short message, an email, an instant messaging tool, and the like.

Further, feedback information that is sent by the meeting participant of the next meeting and about whether to participate in the meeting punctually is received; a schedule of the meeting participant of the next meeting is acquired; and then the meeting notification may be sent to the meeting participant of the next meeting according to the phase conclusion of the current meeting, the feedback information of the meeting participant of the next meeting, and the schedule of the meeting participant of the next meeting.

For example:
if the phase conclusion of the current meeting is that the meeting ends or the phase conclusion of the current meeting is that the meeting is terminated, time arrangement of the participant of the next meeting does not conflict with meeting start time, and a quantity of participants of the next meeting meets a minimum required quantity, the next meeting is held punctually;
if the phase conclusion of the current meeting is that the meeting is delayed or the quantity of participants of the next meeting cannot meet the minimum required quantity, the next meeting is rescheduled; and
if a meeting initiator determines to cancel the meeting, the next meeting is canceled.

A usage scenario of the meeting scheduling method provided by the embodiment is not limited to a meeting room, and can also be used in any gathering places such as a classroom, a cinema, and a speech site.

According to the meeting scheduling method provided by the embodiment of the present invention, phase information of a current meeting is acquired, proper data mining analysis is performed on the information to obtain a phase conclusion of the current meeting, and a meeting notification is sent to a meeting participant of a next meeting according to the phase conclusion of the current meeting, thereby saving waiting time of the participant of the next meeting, increasing working efficiency, and overcoming a disadvantage in the prior art that: notification and scheduling can be performed only according to reserved meeting start time of a next meeting, which is inadequate to cope with a current complex working environment, for example, when a current meeting is delayed, a participant of a later meeting is still confronted with uncertain waiting time, resulting in reduced working efficiency.

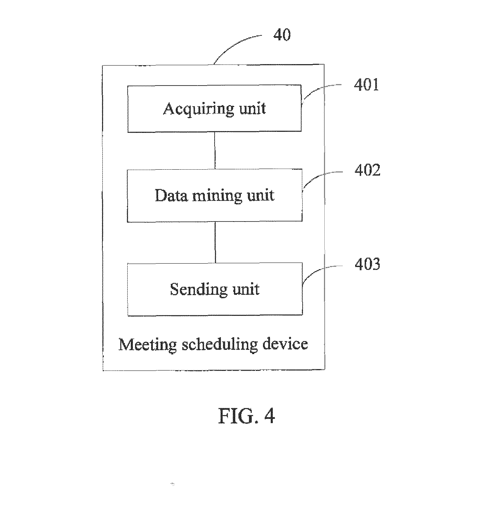

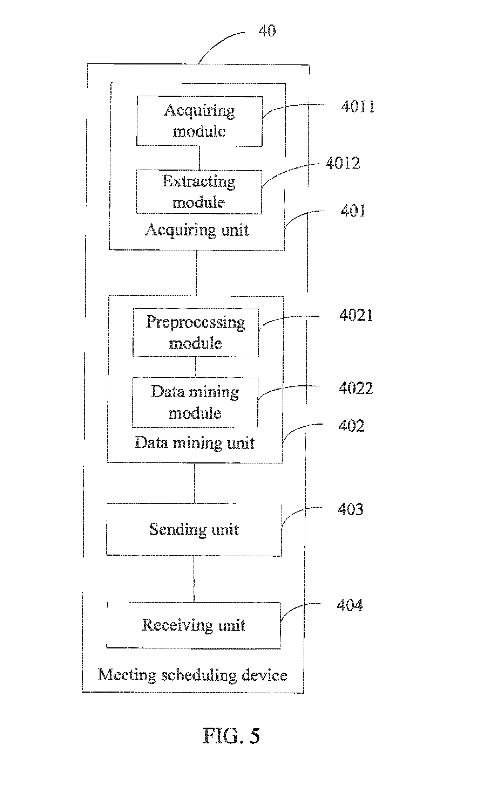

An embodiment of the present invention provides a meeting scheduling device 40, and referring to FIG. 4 to FIG. 5, the meeting scheduling device 40 includes:
an acquiring unit 401, configured to acquire phase information of a current meeting according to a preset database, and transmit the phase information of the current meeting to a data mining unit 402;
the data mining unit 402, configured to receive the phase information of the current meeting from the acquiring unit 401, perform data mining on the phase information of the current meeting according to a preset policy to acquire a phase conclusion of the current meeting, and transmit the phase conclusion of the current meeting to a sending unit 403; and
the sending unit 403, configured to receive the phase conclusion of the current meeting from the data mining unit 402, and send a meeting notification to a meeting participant of a next meeting according to the phase conclusion of the current meeting. Further, referring to FIG. 5, the acquiring unit 401 may include:
an acquiring module 4011, configured to acquire initial information of the current meeting, where the initial information of the current meeting includes one or several types of the following information: document information, audio information, video information, and meeting room environment change information; and
an extracting module 4012, configured to extract information, which is in the initial information of the current meeting and matches information in the preset database, as the phase information of the current meeting.

The data mining unit 402 may include:
a preprocessing module 4021, configured to preprocess the phase information of the current meeting, and convert the phase information of the current meeting into a digital stream, where
the preprocessing module 4021 includes: a data cleaning submodule, configured to perform data cleaning on the phase information of the current meeting, so as to delete repetitive information from the phase information of the current meeting; a data integration submodule, configured to perform data integration on phase information that is of the current meeting and that is after the data cleaning, and establish a data warehouse; and a data conversion submodule, configured to assign, to phase information in the data warehouse, a weight value corresponding to matched preset phase information in the preset logical database, and map the acquired weight value into an initial digital stream to obtain a digital stream, where the logical database includes preset phase information that is arranged in a preset sequence and that has different weight values, and a sequence of the initial digital stream is the same as the sequence of the preset phase information in the logical database; and
a data mining module 4022, configured to perform data mining, according to a preset data mining algorithm, on the digital stream converted from the phase information of the current meeting, so as to acquire the phase conclusion of the current meeting.

Optionally, when the phase conclusion that is of the current meeting and acquired by the data mining unit 402 is that the meeting ends, the sending unit 403 may be specifically configured to send, to the meeting participant of the next meeting, a notification of participating in the meeting according to start time of the next meeting;
when the phase conclusion that is of the current meeting and acquired by the data mining unit 402 is that the meeting is terminated, the sending unit 403 may be specifically configured to send, to the meeting participant of the next meeting, the notification of participating in the meeting according to start time of the next meeting; and
when the phase conclusion that is of the current meeting and acquired by the data mining unit 402 is that the meeting is delayed, the sending unit 403 may be specifically configured to send, to the meeting participant of the next meeting, a notification that the current meeting is delayed or that a new meeting room is arranged for the next meeting.

Further, the meeting scheduling device 40 may further include:
a receiving unit 404, configured to receive feedback information that is sent by the meeting participant of the next meeting and about whether to participate in the meeting punctually.

Correspondingly, the acquiring unit 401 may be further configured to acquire a schedule of the meeting participant of the next meeting; and
the sending unit 403 may be further configured to send the meeting notification to the meeting participant of the next meeting according to the phase conclusion of the current meeting, the feedback information of the meeting participant of the next meeting, and the schedule of the meeting participant of the next meeting.

According to the meeting scheduling device 40 provided by the embodiment of the present invention, phase information of a current meeting is acquired, proper data mining analysis is performed on the information to obtain a phase conclusion of the current meeting, and a meeting notification is sent to a meeting participant of a next meeting according to the phase conclusion of the current meeting, thereby saving waiting time of the participant of the next meeting, increasing working efficiency, and overcoming a disadvantage in the prior art that: notification and scheduling can be performed only according to reserved meeting start time of a next meeting, which is inadequate to cope with a current complex working environment, for example, when a current meeting is delayed, a participant of a later meeting is still confronted with uncertain waiting time, resulting in reduced working efficiency.

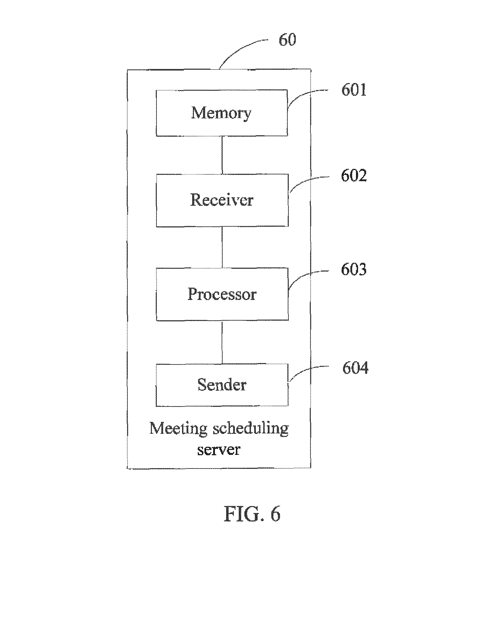

An embodiment of the present invention provides a meeting scheduling server 60, and referring to FIG. 6, the meeting scheduling server 60 includes:
a memory 601, configured to store a preset database, a preset policy, and a preset logical database, where the logical database includes preset phase information that is arranged in a preset sequence and that has different weight values;
a receiver 602, configured to acquire initial information of current meeting, where the initial information of the current meeting includes one or several types of the following information: document information, audio information, video information, and meeting room environment change information;
a processor 603, configured to extract phase information of the current meeting according to the preset database and the initial information that is of the current meeting and that is acquired by the receiver, and perform data mining on the phase information of the current meeting according to the preset policy and the preset logical database to acquire a phase conclusion of the current meeting; and
a sender 604, configured to send a meeting notification to a meeting participant of a next meeting according to the phase conclusion of the current meeting.

Exemplarily, the processor 603 may use the following process to acquire the phase conclusion of the current meeting:
1. Extract information, which is in the initial information of the current meeting and matches information in the preset database, as the phase information of the current meeting;
2. Perform data cleaning on the phase information of the current meeting, so as to delete repetitive information from the phase information of the current meeting;
3. Perform data integration on phase information that is of the current meeting and that is after the data cleaning, and establish a data warehouse;
4. Convert acquired phase information in the data warehouse into a digital stream; and
5. Perform data mining on the digital stream according to a preset data mining algorithm and a preset policy to acquire the phase conclusion of the current meeting. Exemplarily, that the sender 604 sends the meeting notification to the meeting participant of the next meeting according to the phase conclusion of the current meeting may include:
   when the acquired phase conclusion of the current meeting is that the meeting ends, sending, to the meeting participant of the next meeting, a notification of participating in the meeting according to start time of the next meeting;
   when the acquired phase conclusion of the current meeting is that the meeting is terminated, sending, to the meeting participant of the next meeting, the notification of participating in the meeting according to start time of the next meeting; and
   when the acquired phase conclusion of the current meeting is that the meeting is delayed, sending, to the meeting participant of the next meeting, a notification that the current meeting is delayed or that a new meeting room is arranged for the next meeting.

Exemplarily, the meeting notification is sent to the participant of the next meeting a preset time in advance, where the meeting notification may include a meeting location and time, and a sending manner may include a short message, an email, an instant messaging tool, and the like.

The receiver 602 may be further configured to receive feedback information that is sent by the meeting participant of the next meeting and about whether to participate in the meeting punctually;
the memory 601 may be further configured to store a schedule of the meeting participant of the next meeting; and
the sender 604 may be further configured to send the meeting notification to the meeting participant of the next meeting according to the phase conclusion of the current meeting, the feedback information of the meeting participant of the next meeting, and the schedule of the meeting participant of the next meeting.

According to the meeting scheduling server 60 provided by the embodiment of the present invention, phase information of a current meeting is acquired, proper data mining analysis is performed on the information to obtain a phase conclusion of the current meeting, and a meeting notification is sent to a meeting participant of a next meeting according to the phase conclusion of the current meeting, thereby saving waiting time of the participant of the next meeting, increasing working efficiency, and overcoming a disadvantage in the prior art that: notification and scheduling can be performed only according to reserved meeting start time of a next meeting, which is inadequate to cope with a current complex working environment, for example, when a current meeting is delayed, a participant of a later meeting is still confronted with uncertain waiting time, resulting in reduced working efficiency.

An embodiment of the present invention further provides a meeting scheduling system, including either one of the foregoing meeting scheduling device 40 and meeting scheduling server 60.

According to the meeting scheduling system provided by the embodiment of the present invention, phase information of a current meeting is acquired, proper data mining analysis is performed on the information to obtain a phase conclusion of the current meeting, and a meeting notification is sent to a meeting participant of a next meeting according to the phase conclusion of the current meeting, thereby saving waiting time of the participant of the next meeting, increasing working efficiency, and overcoming a disadvantage in the prior art that: notification and scheduling can be performed only according to reserved meeting start time of a next meeting, which is inadequate to cope with a current complex working environment, for example, when a current meeting is delayed, a participant of a later meeting is still confronted with uncertain waiting time, resulting in reduced working efficiency.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in the present application, it should be understood that the disclosed system, apparatus, and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit. When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform a part of the steps of the methods described in the embodiments of the present invention. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of the present invention.

## Claims

1. A meeting scheduling method, comprising:
acquiring phase information of a current meeting according to a preset database;
performing data mining on the phase information of the current meeting according to a preset policy to acquire a phase conclusion of the current meeting; and
sending a meeting notification to a meeting participant of a next meeting according to the phase conclusion of the current meeting.

2. The meeting scheduling method according to claim 1, wherein the acquiring phase information of a current meeting according to a preset database comprises:
acquiring initial information of the current meeting, wherein the initial information of the current meeting comprises one or several types of the following information: document information, audio information, video information, and meeting room environment change information; and
extracting information, which is in the initial information of the current meeting and matches information in the preset database, as the phase information of the current meeting.

3. The meeting scheduling method according to claim 1 or 2, wherein the performing data mining on the phase information of the current meeting according to a preset policy to acquire a phase conclusion of the current meeting comprises:
preprocessing the phase information of the current meeting, and converting the phase information of the current meeting into a digital stream; and
performing data mining, according to a preset data mining algorithm, on the digital stream converted from the phase information of the current meeting, so as to acquire the phase conclusion of the current meeting.

4. The meeting scheduling method according to claim 3, wherein the preprocessing the phase information of the current meeting comprises:
performing data cleaning on the phase information of the current meeting, so as to delete repetitive information from the phase information of the current meeting;
performing data integration on phase information that is of the current meeting and that is after the data cleaning, and establishing a data warehouse; and
assigning, to phase information in the data warehouse, a weight value corresponding to matched preset phase information in a preset logical database, and mapping the acquired weight value into an initial digital stream to obtain a digital stream, wherein the logical database comprises preset phase information that is arranged in a preset sequence and that has different weight values, and a sequence of the initial digital stream is the same as the sequence of the preset phase information in the logical database.

5. The meeting scheduling method according to claim 4, wherein the phase conclusion of the current meeting comprises: the meeting ends, the meeting is terminated, and the meeting is delayed.

6. The meeting scheduling method according to claim 5, wherein
when the acquired phase conclusion of the current meeting is that the meeting ends, the sending a meeting notification to a meeting participant of a next meeting according to the phase conclusion of the current meeting comprises: sending, to the meeting participant of the next meeting, a notification of participating in the meeting according to start time of the next meeting;
when the acquired phase conclusion of the current meeting is that the meeting is terminated, the sending a meeting notification to a meeting participant of a next meeting according to the phase conclusion of the current meeting comprises: sending, to the meeting participant of the next meeting, the notification of participating in the meeting according to start time of the next meeting; and
when the acquired phase conclusion of the current meeting is that the meeting is delayed, the sending a meeting notification to a meeting participant of a next meeting according to the phase conclusion of the current meeting comprises: sending, to the meeting participant of the next meeting, a notification that the current meeting is delayed or that a new meeting room is arranged for the next meeting.

7. The meeting scheduling method according to claim 6, wherein the sending a meeting notification to a meeting participant of a next meeting according to the phase conclusion of the current meeting further comprises:
receiving feedback information that is sent by the meeting participant of the next meeting and about whether to participate in the meeting punctually;
acquiring a schedule of the meeting participant of the next meeting; and
sending the meeting notification to the meeting participant of the next meeting according to the phase conclusion of the current meeting, the feedback information of the meeting participant of the next meeting, and the schedule of the meeting participant of the next meeting.

8. A meeting scheduling device, comprising:
an acquiring unit, configured to acquire phase information of a current meeting according to a preset database, and transmit the phase information of the current meeting to a data mining unit;
the data mining unit, configured to receive the phase information of the current meeting from the acquiring unit, perform data mining on the phase information of the current meeting according to a preset policy to acquire a phase conclusion of the current meeting, and transmit the phase conclusion of the current meeting to a sending unit; and
the sending unit, configured to receive the phase conclusion of the current meeting from the data mining unit, and send a meeting notification to a meeting participant of a next meeting according to the phase conclusion of the current meeting.

9. The meeting scheduling device according to claim 8, wherein the acquiring unit comprises:
an acquiring module, configured to acquire initial information of the current meeting, wherein the initial information of the current meeting comprises one or several types of the following information: document information, audio information, video information, and meeting room environment change information; and
an extracting module, configured to extract information, which is in the initial information of the current meeting and matches information in the preset database, as the phase information of the current meeting; or
the data mining unit comprises:
a preprocessing module, configured to preprocess the phase information of the current meeting, and convert the phase information of the current meeting into a digital stream; and
a data mining module, configured to perform data mining, according to a preset data mining algorithm, on the digital stream converted from the phase information of the current meeting, so as to acquire the phase conclusion of the current meeting.

10. The meeting scheduling device according to claim 9, wherein the preprocessing module comprises:
a data cleaning submodule, configured to perform data cleaning on the phase information of the current meeting, so as to delete repetitive information from the phase information of the current meeting;
a data integration submodule, configured to perform data integration on phase information that is of the current meeting and that is after the data cleaning, and establish a data warehouse; and
a data conversion submodule, configured to assign, to phase information in the data warehouse, a weight value corresponding to matched preset phase information in the preset logical database, and map the acquired weight value into an initial digital stream to obtain a digital stream, wherein the logical database comprises preset phase information that is arranged in a preset sequence and that has different weight values, and a sequence of the initial digital stream is the same as the sequence of the preset phase information in the logical database.

11. A meeting scheduling server, comprising:
a memory, configured to store a preset database, a preset policy, and a preset logical database, wherein the logical database comprises preset phase information that is arranged in a preset sequence and that has different weight values;
a receiver, configured to acquire initial information of a current meeting, wherein the initial information of the current meeting comprises one or several types of the following information: document information, audio information, video information, and meeting room environment change information;
a processor, configured to extract phase information of the current meeting according to the preset database and the initial information that is of the current meeting and that is acquired by the receiver, and perform data mining on the phase information of the current meeting according to the preset policy and the preset logical database to acquire a phase conclusion of the current meeting; and
a sender, configured to send a meeting notification to a meeting participant of a next meeting according to the phase conclusion of the current meeting.

12. The meeting scheduling server according to claim 11, wherein
the receiver is further configured to receive feedback information that is sent by the meeting participant of the next meeting and about whether to participate in the meeting punctually;
the memory is further configured to store a schedule of the meeting participant of the next meeting; and
the sender is further configured to send the meeting notification to the meeting participant of the next meeting according to the phase conclusion of the current meeting, the feedback information of the meeting participant of the next meeting, and the schedule of the meeting participant of the next meeting.

13. A meeting scheduling system, comprising the meeting scheduling device according to any one of claims 8 to 10, or the meeting scheduling server according to claim 11 or 12.
